# FASCICULE DE BREVET EUROPEEN

(11) **EP 1 615 427 B1**
(45) Date de publication et mention de la délivrance du brevet: **21.05.2014**
(21) Numéro de dépôt: 05291412.4
(22) Date de dépôt: 30.06.2005
(51) Int. Cl.: H04N 5/222

(54) **Procédé d'obtention d'une succession d'images sous la forme d'un effet tournant**
Verfahren zur Aufnahme einer Folge von Bildern mit einem Dreheffekt
Process for obtaining a succession of images with a rotating effect

(30) Priorité: 07.07.2004 FR 0407542
(43) Date de publication de la demande: 11.01.2006
(73) Titulaire: EVS International (Swiss) Sàrl, 1700 Fribourg (CH)
(72) Inventeur: Gafsou, Olivier, 4092130 Issy-les-Moulineaux (FR); Skrzypniak, Matthieu, 78120 Rambouillet (FR); Dulin, Serge, 77710 Nanteau sur Lunain (FR); Lecharny, Jean, 78220 Viroflay (FR)
(74) Mandataire: Cabinet Plasseraud

(56) Documents cités:
- GB-A- 2 392 334
- US-A- 5 353 392
- US-A- 5 729 471
- US-A1- 2002 190 991
- US-B1- 6 606 422

## Description

La présente invention est relative au domaine du traitement d'images acquises par des caméras et destinées notamment à une diffusion télévisuelle.

On connaît par certaines représentations cinématographiques un effet visuel, dit ci-après "*effet tournant*", dans lequel le point de prise de vue paraît tourner autour d'un objet d'intérêt, tel qu'un personnage effectuant un saut en l'air.

Pour obtenir cet effet, on prévoit plusieurs caméras, ou encore des appareils photographiques, agencés typiquement sur un cercle ou un arc de cercle autour de l'objet d'intérêt. On déclenche sensiblement instantanément l'ouverture des appareils photographiques ou le début d'acquisition d'images des caméras. On obtient alors plusieurs images issues respectivement des appareils photographiques ou des caméras, selon plusieurs angles de prise de vue. On construit une séquence de film dont chaque image est l'une des images acquises respectivement par les appareils ou les caméras. Ces images sont concaténées, dans le film, dans un ordre qui correspond à un ordre de positions respectives des appareils ou caméras sur l'arc de cercle ou le cercle précités. Le film correspondant à cette séquence d'images représente alors un effet visuel selon lequel un observateur a la sensation de tourner autour de l'objet d'intérêt.

Un procédé de ce type est connu notamment par le document US-2003/0133018. Dans ce document, plusieurs appareils photographiques sont agencés autour d'un objet d'intérêt, sensiblement immobile. Plus particulièrement, le déclenchement de la prise de vue de l'un des appareils, dit *"maître",* déclenche aussi la prise de vue des autres appareils, dits *"esclaves".* A cet effet, les appareils esclaves comportent un capteur de lumière pour détecter le flash que provoque le déclenchement de l'appareil maître.

L'effet visuel correspondant à cet effet tournant s'est avéré d'un grand intérêt notamment pour la retransmission d'événements sportifs. Par exemple, pour une retransmission télévisuelle d'un match de football en direct, il s'est avéré utile d'obtenir plusieurs angles de prise de vue d'une même action de jeu, notamment lorsque l'un des joueurs réalisait une faute de main dans la surface de réparation. Dans ce cas, une séquence représentant un effet tournant autour du joueur, émise en léger différé, permettrait aux téléspectateurs de mesurer l'intention du joueur de commettre cette faute.

Toutefois, cette application de l'effet tournant à la retransmission d'évènements sportifs présente des difficultés techniques de mise en oeuvre, dues en particulier au fait que les "*objets d'intérêt" précités* sont typiquement des sportifs ou des véhicules de course qui sont en mouvement.

Une solution envisageable pour pallier ce problème est de prévoir plusieurs caméras, dont une caméra "*maître*" qui suit les mouvements d'un objet d'intérêt et des caméras "*esclaves*" qui suivent les réglages en focalisation, zoom, position, mutation (ou "*pan*") et élévation (ou "*tilt*") de la caméra maître, par asservissement.

Cette technique est décrite notamment dans le document US2002/190991.

Toutefois, cette solution paraît lourde à mettre en oeuvre, compte tenu notamment de toute l'instrumentation nécessaire à la transmission des données de réglage de la caméra maître, vers les caméras esclaves. Il faut aussi calibrer initialement les réglages de toutes les caméras.

La présente invention vient améliorer la situation.

Elle propose à cet effet un procédé pour obtenir une succession d'images sous la forme d'une séquence représentant un effet tournant sensiblement autour d'un objet d'intérêt, conforme à la revendication 1.

On indique que l'un des inventeurs de la présente demande proposait, dans le document US-6,606,422, d'utiliser une caméra fixe à grand champ, préférentiellement de haute définition (par rapport à un organe de visualisation), pour :
- identifier dans l'image courante que délivre cette caméra une zone d'intérêt à l'aide de repères prédéterminés, et
- appliquer le remplacement d'une partie au moins de cette zone par une image choisie, telle qu'un logo publicitaire ou autre.

Ainsi, la simulation d'un mouvement de la caméra pouvait être menée en effectuant un zoom numérique dans une région de l'image englobant les repères prédéterminés et en faisant évoluer la zone d'intérêt d'une image zoomée à l'autre.

Cette technique décrite dans US-6,606,422 et dite de "*warping*" à partir d'une caméra fixe, est préférentiellement utilisée et adaptée pour la mise en oeuvre du procédé au sens de l'invention.

Ainsi, dans une réalisation préférentielle, on effectue sur les images acquises un zoom d'une zone entourant l'objet d'intérêt et définie par ses dimensions incluant la plus petite distance, parmi les images acquises, entre l'objet d'intérêt et un bord d'image.

Cette réalisation s'avère avantageuse lorsque l'objet d'intérêt est proche d'un bord de la scène précitée, pour au moins l'une des caméras, comme on le verra plus loin dans la description détaillée en référence aux dessins.

La présente invention vise aussi un dispositif de traitement d'images, comportant :
- des entrées pour recevoir des signaux d'images émanant d'une pluralité de caméras numériques,
- des moyens mémoires propres à stocker successivement lesdits signaux d'images, et
- une unité de traitement desdits signaux.

En particulier, l'unité de traitement comporte une mémoire propre à stocker un produit programme d'ordinateur, lequel comporte alors des instructions pour la mise en oeuvre de tout ou partie des étapes du procédé selon l'invention.

A ce titre, la présente invention vise aussi un tel produit programme d'ordinateur, destiné à être stocké dans une mémoire d'une unité de traitement du type précité, ou sur un support mémoire amovible et destiné à coopérer avec un lecteur de ladite unité de traitement.

D'autres caractéristiques et avantages de l'invention apparaîtront à l'examen de la description détaillée ci-après, et des dessins annexés sur lesquels :
- la figure 1 représente schématiquement un dispositif informatique pour la mise en oeuvre du procédé au sens de l'invention,
- la figure 2 illustre schématiquement la disposition fixe des caméras par rapport à l'objet d'intérêt, susceptible d'être mobile,
- les figures 3a à 3m illustrent une partie au moins des images acquises et zoomées par la mise en oeuvre du procédé selon une réalisation avantageuse de l'invention, pour un évènement sportif,
- les figures 4a et 4b représente les images brutes et non zoomées correspondant respectivement aux figures 3b et 3g précitées, et
- la figure 5 représente un organigramme résumant les étapes principales de traitement des images acquises, selon une réalisation particulière de l'invention.

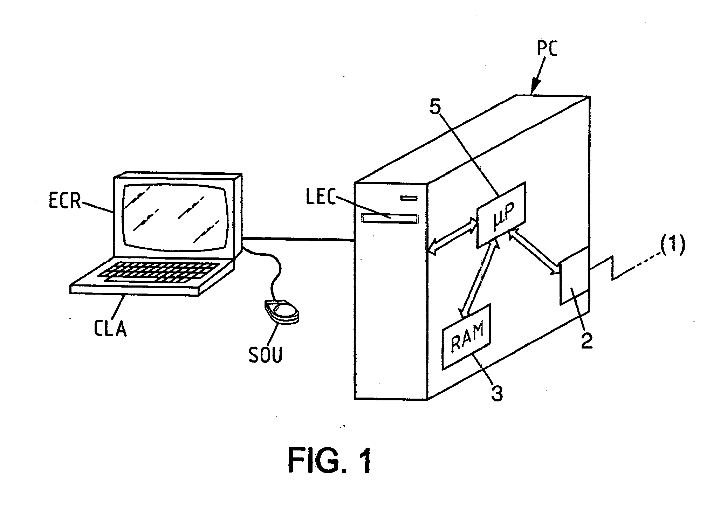

On se réfère tout d'abord à la figure 1 sur laquelle on a représenté schématiquement une unité de traitement informatique pour la mise en oeuvre du procédé au sens de l'invention. L'unité de traitement PC comporte une interface 2 comportant des entrées pour recevoir des signaux d'images 1 émanant d'une pluralité de caméras numériques. Elle comporte en outre des moyens mémoires 3, par exemple une mémoire temporaire RAM, propres à stocker successivement ces signaux d'images. En outre, on prévoit un support mémoire propre à stocker un produit programme d'ordinateur qui comporte des instructions pour la mise en oeuvre de tout ou partie des étapes du procédé selon l'invention. Par exemple, le programme informatique peut être stocké sur un support mémoire amovible tel qu'un CD-ROM propre à coopérer avec un lecteur homologue LEC que comporte l'unité de traitement PC, ou encore une clé USB. En variante, il peut être stocké dans une mémoire, par exemple permanente de type ROM, de l'unité de traitement PC. Dans une autre variante, ce programme peut être téléchargé d'un site distant grâce à une interface de communication (non représentée) que peut comporter l'unité de traitement.

Dans l'exemple représenté sur la figure 1, un processeur 5 coopère avec l'ensemble des éléments décrits ci-avant, pour piloter les interactions entre ces éléments. L'unité de traitement comporte en outre un moniteur de visualisation ECR, ainsi qu'un ou plusieurs organes de saisie tels qu'un clavier CLA et une souris SOU.

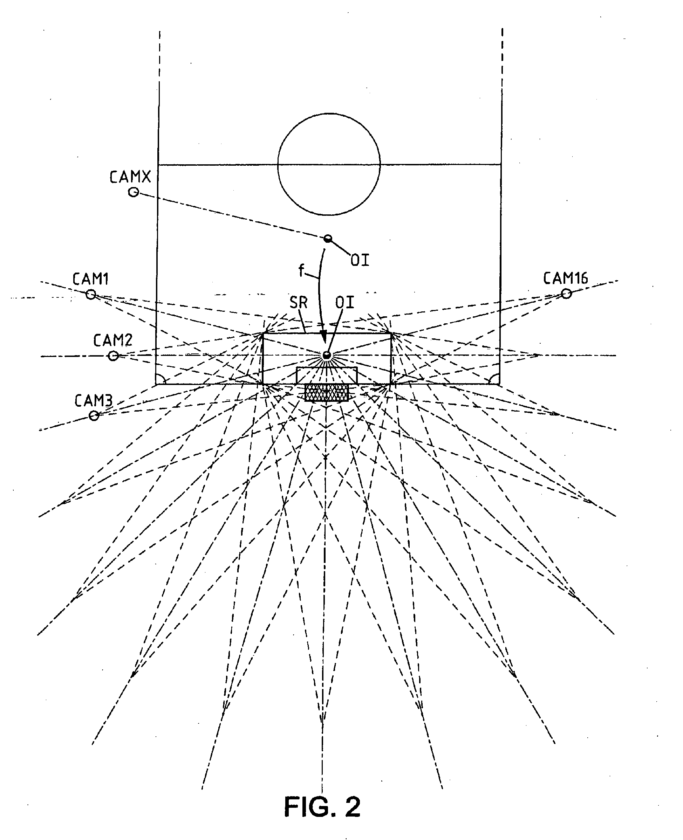

On a représenté sur la figure 2 une pluralité de caméras CAM1 à CAM16 qui délivrent les signaux d'images numériques 1 précités. Dans l'exemple représenté, la scène à filmer comporte une surface de réparation SR d'un terrain de football. Préférentiellement, on prévoit environ seize caméras fixes CAM1 à CAM16 dans cette application. Ces caméras sont réparties autour de la surface de réparation, sensiblement en ligne (par exemple sur un arc de cercle ou d'ellipse) pour capturer dans leur champ, selon des angles de prise de vues respectifs différents, une scène fixe comportant la surface de réparation SR, dans laquelle est susceptible d'évoluer un objet d'intérêt OI, tel que l'un des joueurs du terrain. On indique que la ligne sur laquelle sont disposées les caméras peut être courbe ou droite, l'essentiel étant que les angles de prise de vues respectifs des caméras soient différents.

On rappelle que les caméras sont fixes en position et en réglage, et acquièrent les prises de vues du joueur OI, en champ large incluant des repères prédéterminés sur la scène. Typiquement, ces repères prédéterminés peuvent être des points caractéristiques de la scène contrastant avec un fond de la scène et repérés par reconnaissance de forme ou de couleur. Par exemple, il peut s'agir des quatre coins de la surface de réparation délimitée par un tracé sensiblement blanc par rapport au vert de la pelouse du terrain. Dans le cas d'une retransmission d'un jeu de tennis, on pourra bien entendu s'appuyer sur des coins de la ligne de fond de court, par exemple.

Dans une variante, les repères prédéterminés sont donnés par une mire agencée initialement sur la scène, par exemple sur le terrain avant le début du jeu et de la retransmission, puisque les caméras sont fixes, notamment entre l'opération de visée de mire et l'acquisition des images de l'objet d'intérêt.

Avantageusement, les caméras sont agencées pour prendre des vues en grand angle de manière à couvrir, ensemble, les plus grandes dimensions possibles de la scène incluant la surface de réparation. Par ailleurs, les caméras sont choisies de haute définition. Cette mesure est avantageuse lorsqu'il est préférable d'effectuer un zoom sur les images acquises, comme on le verra plus loin. Dans ce cas, la séquence après zoom peut être sensiblement de simple définition si les images initiales étaient de haute définition.

L'homme du métier pourra se référer au document US-6,606,422 pour plus de détails sur le suivi d'un objet d'intérêt ou d'une zone d'intérêt dans une image en champ large, grâce à des repères prédéterminés.

On indique simplement ici que les images vidéo sont acquises sous forme d'une matrice de pixels, à partir des signaux 1 provenant des caméras fixes à grand champ et à haute définition (par exemple, selon la norme HDTV, 1920x1080 pixels ou plus) généralement supérieure à celle d'un organe de visualisation, tel qu'un poste de télévision standard ou le moniteur de visualisation ECR de la figure 1. On sélectionne alors de façon dynamique, dans le champ de la caméra, une zone de format correspondant à celui de l'organe de visualisation (typiquement 720x576 pixels en Europe au système Pal ou Secam, ou encore 720x486 pixels aux Etats-Unis d'Amérique, au système NTSC) et incluant l'objet d'intérêt OI. On génère ensuite, par interpolation, à partir des pixels dans la zone commune sélectionnée dans les images fournies par les caméras, les pixels d'une image à la taille et à la définition de l'organe de visualisation. A cet effet, on peut prévoir préférentiellement d'effectuer un zoom numérique sur les images acquises par les caméras fixes.

Cette étape de zoom numérique peut se justifier comme suit. Dans l'exemple décrit ici, on a choisi la surface de réparation SR en tant que scène incluant des repères prédéterminés tels que des points caractéristiques. Dans cet exemple, les caméras doivent inclure dans leur champ les coins de la surface de réparation correspondant aux points caractéristiques précités. On comprendra toutefois que la surface de réparation est de taille bien supérieure à la taille normale d'un joueur, alors que ce joueur peut représenter l'objet d'intérêt autour duquel on souhaite appliquer l'effet tournant. Il en résulte que le joueur d'intérêt apparaît de très petite taille sur l'image brute acquise. Pour cette première raison déjà, il peut être préféré d'appliquer un zoom numérique sur une zone entourant le joueur d'intérêt dans les images acquises.

Par ailleurs, le joueur auquel on souhaite appliquer l'effet tournant peut être placé près d'un bord de la scène dans l'image acquise par une caméra. Dans ce cas, le joueur paraît excentré dans l'image. Il peut être avantageusement prévu d'appliquer un zoom numérique dans une zone entourant le joueur d'intérêt dans cette image, pour recentrer sensiblement cette image zoomée autour du joueur d'intérêt.

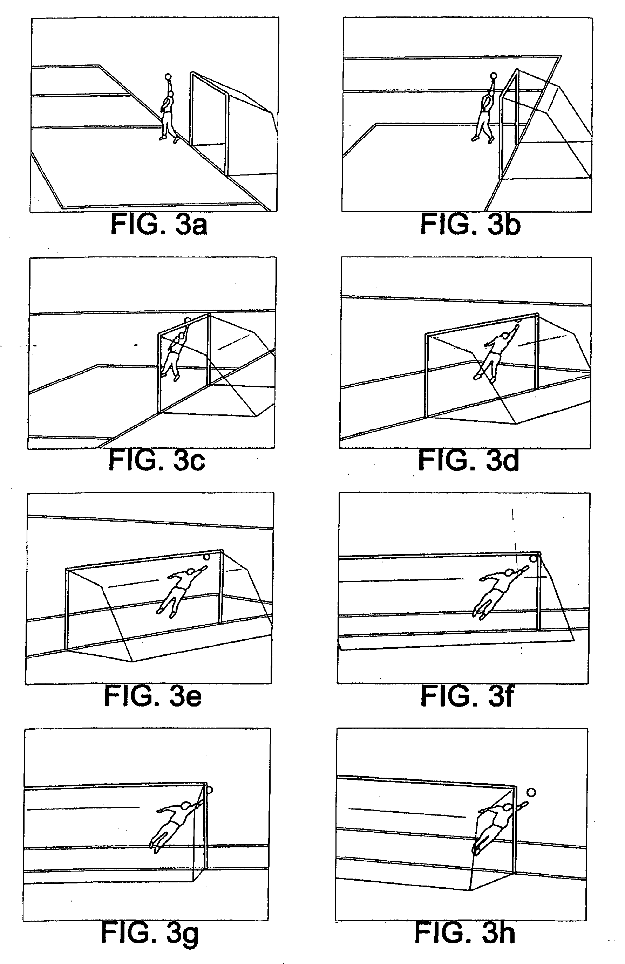

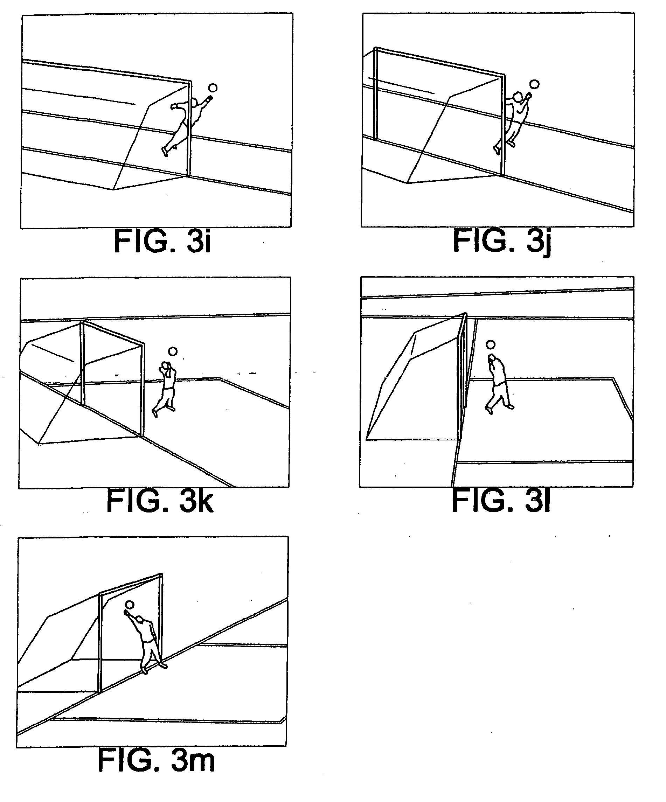

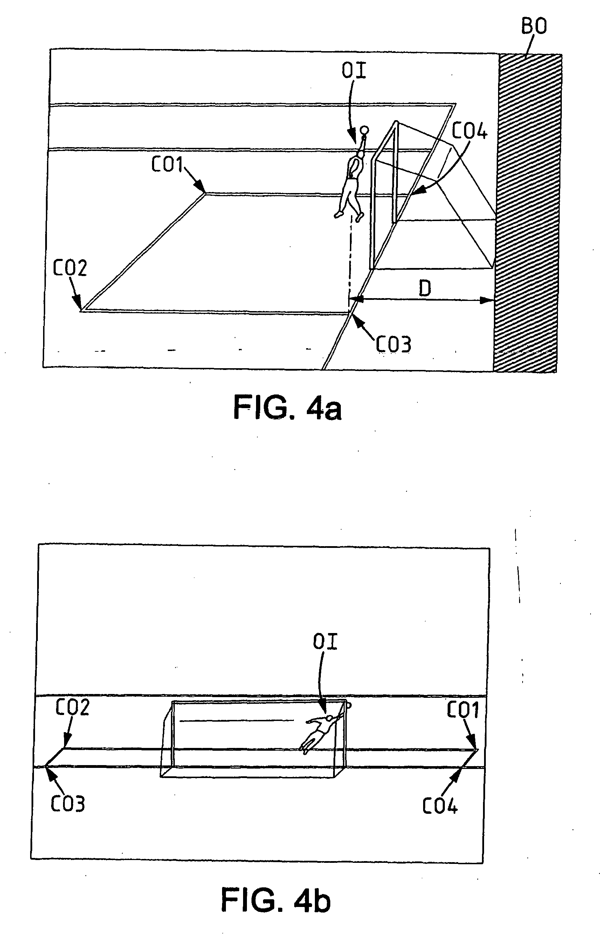

Pour expliquer ce qui précède par des dessins, on a représenté sur les figures 3a à 3m une partie des images acquises par les caméras de la figure 2 et zoomées ensuite. On a représenté aussi, sur les figures 4a et 4b, les images brutes, avant l'étape de zoom, correspondant aux figures 3b et 3g.

Ici, le joueur d'intérêt est un gardien de but effectuant un arrêt. Il est préféré dans cet exemple de sélectionner la surface des cinq mètres cinquante en tant que scène et les angles de cette surface en tant que points caractéristiques. On indique aussi que les points caractéristiques peuvent être sélectionnés dynamiquement d'une mise en oeuvre du procédé à l'autre, par exemple en régie.

On constate déjà que la succession des images des figures 3a à 3m produit l'effet visuel correspondant à l'effet tournant précité.

Les figures 4a et 4b comportent, comme indiqué ci-avant, les quatre points caractéristiques CO1 à CO4 correspondant aux coins de la surface des cinq mètres cinquante dans laquelle évolue ici le gardien de but OI. On indique toutefois que l'un ou plusieurs des points caractéristiques peuvent être perdus dans une image acquise par une caméra ou, en d'autres mots, *"sortir"* du champ de cette caméra. Dans ce cas, le procédé de l'invention, selon une réalisation avantageuse, prévoit une étape consistant à retrouver la position des points caractéristiques manquant en s'aidant d'une ligne de contraste autre que la ligne des cinq mètres cinquante, par exemple à partir de la ligne de la surface de réparation. On comprendra que l'on utilise encore ici une reconnaissance de formes dans l'image acquise.

Sur la figure 4b, on constate que l'objet d'intérêt OI paraît de petite taille dans l'image. On comprendra que l'on effectue préférentiellement un zoom numérique dans une zone autour du joueur OI.

En outre, sur la figure 4a, le joueur OI apparaît près d'un bord de la scène. Pour recaler les images acquises par les caméras respectives entre elles, on cherche préférentiellement à recentrer sensiblement les images les unes par rapport aux autres. Ici, on cherche typiquement à recentrer l'image correspondant à la figure 4a sensiblement autour du joueur OI. Toutefois, si l'on mène ce recentrage sur l'image brute acquise (de la gauche vers la droite dans l'exemple représenté sur la figure 4a), une bande noire BO de bordure d'image peut tout simplement apparaître, dans certains systèmes de traitement d'images.

On comprendra ainsi que la distance D de l'objet d'intérêt OI à un bord d'image BO peut définir le niveau du zoom numérique qui est effectué.

Bien entendu, pour ne pas créer de sauts d'échelle d'une image à l'autre, on applique des zooms équivalents à des images consécutives.

En bref, dans une réalisation préférentielle, on effectue sur les images acquises un zoom d'une zone entourant l'objet d'intérêt et définie par ses dimensions incluant la plus petite distance D, parmi les images acquises, entre l'objet d'intérêt OI et un bord d'image BO.

En se référant à nouveau à la figure 2, on a représenté en outre une caméra supplémentaire CAMX, mobile en position et/ou en réglage, capable donc de suivre les déplacements de l'objet d'intérêt OI. Cette caméra CAMX peut acquérir une première série d'images, par exemple du joueur OI dont le déplacement est représenté par la flèche f de la figure 2.

Avantageusement, on peut construire une séquence par concaténation de cette première série d'images avec les images respectivement acquises par les caméras fixes CAM1 à CAM16. On procède préférentiellement au recalage de la ou des dernières images acquises par la caméra mobile avec les images acquises par les caméras fixes.

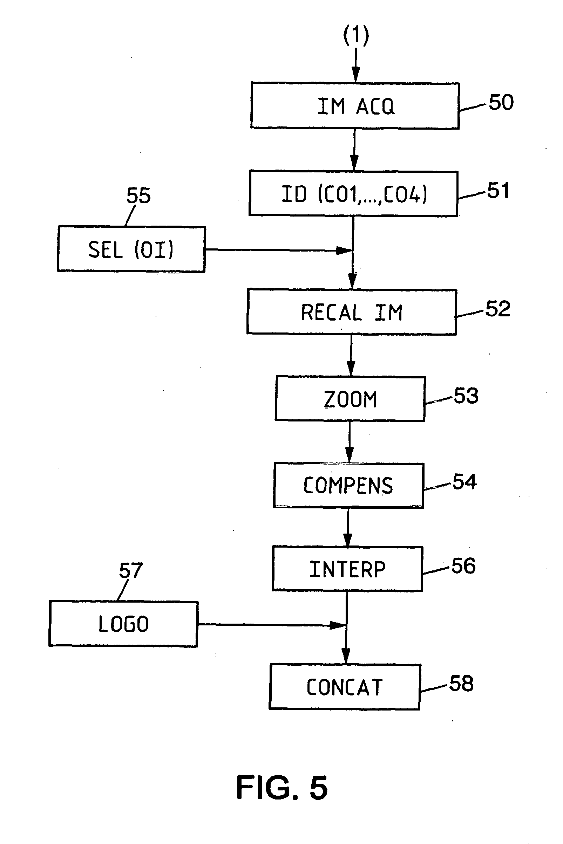

On se réfère maintenant à la figure 5 pour résumer les principales étapes de traitement des images acquises, selon une réalisation avantageuse de l'invention.

A l'étape 50, on a récupéré, sous la forme des signaux 1 précités, différentes images acquises en grand champ par les caméras fixes et représentant l'objet d'intérêt OI dans une scène incluant les repères prédéterminés CO1 à C04. On indique que les caméras acquièrent, en même temps, des successions respectives d'images, et l'on isole préférentiellement une seule image par caméra pour construire une séquence d'effet tournant.

A l'étape 51, on identifie, comme indiqué ci-avant, les repères prédéterminés CO1 à CO4 sur les images acquises pour mener, à l'étape 52, un recalage des images en positions respectives les unes par rapport aux autres, à l'aide des repères prédéterminés CO1 à C04 sur la scène.

Toutefois, pour recaler ces images sensiblement autour de l'objet d'intérêt, on procède, à l'étape 55, à une sélection, par exemple manuelle, de l'objet d'intérêt OI dans l'une au moins des images acquises (la sélection de l'objet d'intérêt dans les images suivantes pouvant s'effectuer de façon automatique ensuite, par exemple par reconnaissance de forme). Ainsi, ultérieurement à l'acquisition des images, on sélectionne un objet d'intérêt OI à suivre dans les images acquises. A cet effet, un manipulateur peut utiliser un organe de saisie tel que la souris SOU de l'unité de traitement PC pour sélectionner l'objet d'intérêt OI.

Ces étapes peuvent être menées typiquement en régie, par exemple lors d'une diffusion audiovisuelle sensiblement en direct. Les images traitées en régie sont alors diffusées en léger différé, comme des séquences dites de *"ralenti"* montrant une seconde fois une action de jeu.

On peut choisir de construire la séquence d'images représentant l'effet tournant à partir d'images acquises sensiblement en même temps par les caméras CAM1 à CAM16, ou, dans une variante, à partir d'images acquises avec un décalage temporel choisi d'une image à l'autre et croissant selon un ordre de caméra dans la ligne formée par les positions respectives des caméras CAM1 à CAM16.

Une fois que les images sont recalées les unes par rapport aux autres, on mène préférentiellement l'étape de zoom numérique 53 décrite ci-avant, notamment pour éviter l'apparition de bordures d'image BO.

A l'étape 54, on prévoit préférentiellement une compensation d'un écart de luminosité et/ou de colorimétrie entre les différentes images acquises, de manière connue en soi.

On peut prévoir en outre une étape 56 d'interpolation entre les images acquises pour produire une séquence sensiblement fluide. Par exemple, une technique dite de "*morphing*" peut être utilisée à cette fin.

De façon avantageuse, on peut prévoir en outre une étape 57 d'insertion virtuelle d'un logo (par exemple publicitaire) ou d'une image additionnelle dans toutes ou partie des images acquises. Une telle insertion est décrite notamment dans le document précité US-6,606,422. On indique simplement ici que cette étape comporte typiquement une définition de la position du logo ou de l'image additionnelle, en fonction des repères prédéterminés CO1 à CO4 sur la scène.

Enfin, à l'étape 58, on construit la séquence proprement dite d'effet tournant, par concaténation des images ainsi traitées avec un ordre de ces images dans la séquence qui correspond à un ordre des positions des caméras le long de la ligne précitée.

Par exemple, l'évènement sportif retransmis peut être différent d'un jeu de football. Dans ce cas, les caméras peuvent être en, nombre différent de seize comme décrit ci-avant et disposées autrement qu'en arc de cercle ou d'ellipse (par exemple sur une ligne droite pour une course hippique ou autre), et le nombre de points caractéristiques choisis peut être différent de quatre comme décrit ci-avant.

## Revendications

1. Procédé pour obtenir une succession d'images sous la forme d'une séquence représentant un effet tournant autour d'un objet d'intérêt, dans lequel:
a) on prévoit une pluralité de caméras agencées sensiblement en ligne pour capturer dans leur champ, selon des angles de prise de vues respectifs différents, une scène fixe et dans laquelle est susceptible d'évoluer ledit objet d'intérêt (OI), lesdites caméras étant fixes en position et en réglage, et acquièrent les prises de vues de l'objet d'intérêt (OI), en champ large, incluant des repères prédéterminés (CO1, CO2, C03, CO4) sur la scène,
b) on récupère différentes images acquises par les caméras et représentant l'objet d'intérêt,
- à l'aide des repères prédéterminés (CO1, CO2, CO3, CO4), on connaît la position de l'objet d'intérêt (OI) en chaque image,
- on superpose les images en faisant coïncider l'objet d'intérêt (OI) sensiblement à une même position sur toutes les images, et
- pour éviter l'apparition de bords d'image, on effectue un zoom numérique dans une zone autour de l'objet d'intérêt et délimitée par lesdits bords, en générant par interpolation, à partir des pixels dans la zone commune sélectionnée dans les images fournies par les caméras, les pixels d'une image à la taille et à la définition de l'organe de visualisation, et
c) on construit une séquence par concaténation desdites images générées par interpolation avec un ordre desdites images dans la séquence correspondant à un ordre de positions des caméras le long de ladite ligne.

2. Procédé selon la revendication 1, **caractérisé en ce que** les caméras (CAM1, CAM2, ..., CAM16) sont choisies de haute définition pour obtenir une séquence après zoom sensiblement de simple définition.

3. Procédé selon l'une des revendications précédentes, **caractérisé en ce qu'**il comporte une étape de compensation (54) d'un écart de luminosité/colorimétrie entre les différentes images acquises.

4. Procédé selon l'une des revendications précédentes, **caractérisé en ce qu'**il comporte une étape, ultérieure à l'acquisition des images, de sélection d'un objet d'intérêt (OI) à suivre dans lesdites images acquises.

5. Procédé selon l'une des revendications précédentes, **caractérisé en ce que** lesdites caméras sont agencées pour prendre des vues en grand angle de manière à couvrir, ensemble, les plus grandes dimensions possibles de la scène.

6. Procédé selon l'une des revendications précédentes, **caractérisé en ce que** lesdits repères prédéterminés sont des points caractéristiques (CO1, CO2, C03, C04) de la scène contrastant avec un fond de la scène.

7. Procédé selon l'une des revendications 1 à 5, **caractérisé en ce que** lesdits repères prédéterminés sont donnés par une mire agencée initialement sur ladite scène, les caméras étant fixes entre l'opération de visée de mire et l'acquisition des images de l'objet d'intérêt.

8. Procédé selon l'une des revendications précédentes, **caractérisé en ce qu'**il comporte une étape d'interpolation (56) entre les images acquises pour produire une séquence sensiblement fluide.

9. Procédé selon l'une des revendications précédentes, **caractérisé en ce qu'**il comporte en outre une étape d'insertion virtuelle (57) d'un logo ou d'une image dans toutes ou partie des images acquises, avec définition de la position du logo ou de l'image en fonction desdits repères prédéterminés sur la scène.

10. Procédé selon l'une des revendications précédentes, **caractérisé en ce que** l'on prévoit en outre une caméra supplémentaire (CAMX), mobile en position et/ou en réglage, apte à suivre des déplacements de l'objet d'intérêt pour acquérir une première série d'images, et **en ce que** l'on construit une séquence par concaténation de ladite première série avec les images acquises par lesdites caméras fixes, avec recalage d'une partie au moins des images de la première série et des images acquises par les caméras fixes.

11. Procédé selon l'une des revendications précédentes, **caractérisé en ce que** les caméras acquièrent, en même temps, des successions respectives d'images, et **en ce que** l'on isole une seule image par caméra pour construire une séquence.

12. Procédé selon la revendication 11, **caractérisé en ce que** la séquence d'image est construite à partir d'images acquises sensiblement en même temps par lesdites caméras.

13. Procédé selon la revendication 11, **caractérisé en ce que** la séquence d'image est construite à partir d'images acquises avec un décalage temporel choisi d'une image à l'autre et croissant selon un ordre de caméra dans ladite ligne.

14. Procédé selon l'une des revendications précédentes, **caractérisé en ce que** la scène comporte une surface de réparation d'un terrain de football, et **en ce que** l'on prévoit environ seize caméras fixes.

15. Procédé selon l'une des revendications précédentes, **caractérisé en ce que** lesdites images sont destinées à une diffusion audiovisuelle sensiblement en direct, et **en ce que** ladite séquence est diffusée en léger différé.

16. Produit programme d'ordinateur, destiné à être stocké dans une mémoire d'une unité de traitement (PC), ou sur un support mémoire amovible et destiné à coopérer avec un lecteur (LEC) de ladite unité de traitement, **caractérisé en ce qu'**il comporte des instructions pour la mise en oeuvre des étapes du procédé selon l'une des revendications précédentes.

17. Dispositif de traitement d'images, comportant :
- des entrées (2) pour recevoir des signaux d'images émanant d'une pluralité de caméras numériques,
- des moyens mémoires (3) propres à stocker successivement lesdits signaux d'images, et
- une unité de traitement desdits signaux,
**caractérisé en ce que** ladite unité de traitement comporte une mémoire stockant un produit programme d'ordinateur selon la revendication 16 pour la mise en oeuvre des étapes du procédé selon l'une des revendications 1 à 15.

18. Dispositif selon la revendication 17, prise en combinaison avec la revendication 4, **caractérisé en ce qu'**il comporte un organe de saisie (CLA, SOU) propre à coopérer avec l'unité de traitement pour sélectionner un objet d'intérêt à suivre dans lesdites images acquises.

## Patentansprüche

1. Verfahren zum Aufnehmen einer Folge von Bildern in einer Sequenz, die einen Dreheffekt um ein bestimmtes Objekt darstellt, wobei:
a) eine Vielzahl von Kameras vorgesehen werden, die im Wesentlichen in einer Linie angeordnet sind, um in ihrem Feld in jeweils unterschiedlichen Aufnahmewinkeln eine feststehende Szene zu erfassen, in der sich das bestimmte Objekt (OI) bewegen kann, wobei die Kameras fest positioniert und fest eingestellt sind und die Aufnahmen des bestimmten Objekts (OI) in einem breiten Feld, das vorbestimmte Bezugspunkte (C01, C02, C03, C04) in der Szene beinhaltet, erhalten,
b) verschiedene von den Kameras erhaltene Bilder, die das bestimmte Objekt darstellen, gesammelt werden,
- mit Hilfe der vorbestimmten Bezugspunkte (C01, C02, C03, C04) die Position des bestimmten Objekts (OI) in jedem Bild ermittelt wird,
- die Bilder so übereinandergelegt werden, dass das bestimmte Objekt (OI) auf allen Bildern im Wesentlichen in einer selben Position ausgerichtet sind, und,
- um das Auftreten von Bildrändern zu vermeiden, in einem Bereich um das bestimmte Objekt, der durch die Ränder begrenzt ist, eine digitale Vergrößerung durchgeführt wird, indem durch Interpolation anhand der Pixel im ausgewählten gemeinsamen Bereich in den von den Kameras bereitgestellten Bildern die Pixel eines Bilds mit der Größe und der Definition der Anzeigeeinrichtung erzeugt werden, und
c) durch Verknüpfung der durch Interpolation erzeugten Bilder eine Sequenz gebildet wird, wobei die Bilder in der Sequenz eine Reihenfolge aufweisen, die einer Reihenfolge der Kameras entlang der Linie entsprechen.

2. Verfahren nach Anspruch 1, **dadurch gekennzeichnet, dass** die Kameras (CAM1, CAM2, ..., CAM16) mit hoher Auflösung ausgewählt sind, um nach Vergrößerung eine Sequenz mit im Wesentlichen einfacher Definition zu erhalten.

3. Verfahren nach einem der vorangehenden Ansprüche, **dadurch gekennzeichnet, dass** es einen Schritt der Kompensation (54) eines Helligkeits-/Kolorimetrieunterschieds zwischen den verschiedenen erhaltenen Bildern umfasst.

4. Verfahren nach einem der vorangehenden Ansprüche, **dadurch gekennzeichnet, dass** es nach dem Erhalt der Bilder einen Schritt der Auswahl eines bestimmten Objekts (OI), das in den erhaltenen Bildern zu verfolgen ist, umfasst.

5. Verfahren nach einem der vorangehenden Ansprüche, **dadurch gekennzeichnet, dass** die Kameras so angeordnet sind, dass sie Weitwinkelaufnahmen aufnehmen, um so zusammen die größtmöglichen Abmessungen der Szene abzudecken.

6. Verfahren nach einem der vorangehenden Ansprüche, **dadurch gekennzeichnet, dass** die vorbestimmten Bezugspunkte charakteristische Punkte (C01, C02, C03, C04) der Szene sind, die zu einem Hintergrund der Szene in Kontrast stehen.

7. Verfahren nach einem der Ansprüche 1 bis 5, **dadurch gekennzeichnet, dass** die vorbestimmten Bezugspunkte durch ein ursprünglich in der Szene angeordnetes Prüfraster gegeben sind, wobei die Kameras zwischen dem Vorgang des Visierens des Prüfrasters und dem Erhalt der Bilder des bestimmten Objekts feststehend sind.

8. Verfahren nach einem der vorangehenden Ansprüche, **dadurch gekennzeichnet, dass** es einen Schritt der Interpolation (56) zwischen den erhaltenen Bildern umfasst, um eine im Wesentlichen fließende Sequenz zu erzeugen.

9. Verfahren nach einem der vorangehenden Ansprüche, **dadurch gekennzeichnet, dass** es einen Schritt der virtuellen Einblendung (57) eines Logos oder eines Bilds in allen erhaltenen Bildern oder in einem Teil derselben mit Definition der Logo- bzw. Bildposition entsprechend den vorbestimmten Bezugspunkten in der Szene umfasst.

10. Verfahren nach einem der vorangehenden Ansprüche, **dadurch gekennzeichnet, dass** ferner eine zusätzliche Kamera (CAMX) vorgesehen ist, die flexibel positionierbar und/oder einstellbar ist und den Bewegungen des bestimmten Objekts folgen kann, um eine erste Bildreihe zu erhalten, und dass durch Verknüpfung der ersten Reihe mit den von den feststehenden Kameras erhaltenen Bildern eine Sequenz erzeugt wird, wobei zumindest ein Teil der Bilder der ersten Reihe und der von den feststehenden Kameras erhaltenen Bildern nachgeregelt wird.

11. Verfahren nach einem der vorangehenden Ansprüche, **dadurch gekennzeichnet, dass** die Kameras jeweilige Bildfolgen zeitgleich erhalten und dass pro Kamera ein einzelnes Bild isoliert wird, um eine Sequenz zu bilden.

12. Verfahren nach Anspruch 11, **dadurch gekennzeichnet, dass** die Bildsequenz anhand von Bildern gebildet wird, die von den Kameras im Wesentlichen zeitgleich erhalten werden.

13. Verfahren nach Anspruch 11, **dadurch gekennzeichnet, dass** die Bildsequenz anhand von Bildern gebildet wird, die mit einer Zeitverzögerung, die einem Bild zum anderen ausgewählt wird und in einer Kamerareihenfolge in der Linie zunimmt, erhalten werden.

14. Verfahren nach einem der vorangehenden Ansprüche, **dadurch gekennzeichnet, dass** die Szene einen Strafraum eines Fußballfeldes umfasst und dass etwa sechzehn feststehende Kameras vorgesehen sind.

15. Verfahren nach einem der vorangehenden Ansprüche, **dadurch gekennzeichnet, dass** die Bilder für eine im Wesentlichen direkte audiovisuelle Ausstrahlung bestimmt sind und dass die Sequenz geringfügig verzögert ausgestrahlt wird.

16. Computerprogrammprodukt, das im Speicher einer Recheneinheit (PC) oder auf einem mobilen Speicherträger gespeichert wird und mit einem Leser (LEC) der Recheneinheit zusammenwirken soll, **dadurch gekennzeichnet, dass** es es Anweisungen zur Umsetzung der Schritte des Verfahrens nach einem der vorangehenden Ansprüche umfasst.

17. Bildverarbeitungsvorrichtung, umfassend:
- Eingänge (2) zum Empfangen von Bildsignalen von einer Vielzahl digitaler Kameras,
- Speichermedien (3) zum aufeinanderfolgenden Speichern der Bildsignale und
- eine Einheit zur Verarbeitung der Signale,
**dadurch gekennzeichnet, dass** die Verarbeitungseinheit einen Speicher umfasst, der ein Computerprogrammprodukt nach Anspruch 16 zur Umsetzung der Schritte des Verfahrens nach einem der Ansprüche 1 bis 15 speichert.

18. Vorrichtung nach Anspruch 17 in Kombination mit Anspruch 4, **dadurch gekennzeichnet, dass** sie eine Erfassungseinrichtung (CLA, SOU) umfasst, die mit der Verarbeitungseinheit zusammenwirken kann, um ein bestimmtes, in den erhaltenen Bildern zu verfolgendes Objekt auszuwählen.

## Claims

1. Method for obtaining a succession of images in the form of a sequence representing a rotating effect around an object of interest, wherein:
a) a plurality of cameras arranged substantially in line are provided to capture in the field thereof, along different respective camera angles, a fixed scene and wherein said object of interest (OI) is liable to move, said cameras being fixed in respect of position and setting, and take the shots of the object of interest (OI), in a wide field, including predefined reference points (CO1, CO2, CO3, CO4) on the scene,
b) various images taken by the cameras and representing the object of interest are retrieved:
- using the predefined reference points (CO1, CO2, C03, C04), the position of the object of interest (OI) of each image is known,
- the images are overlaid by aligning the object of interest (OI) substantially at the same position on all the images, and
- to prevent the appearance of image borders, a digital zoom is performed in a zone around the object of interest defined by said borders, by generating by interpolation, using the pixels in the common zone selected in the images supplied by the cameras, the pixels of image to the size and definition of the viewing device, and
c) a sequence is constructed by concatenating said images generated by interpolation with an order of said images in the sequence corresponding to an order of positions of the cameras along said line.

2. Method according to claim 1, **characterised in that** the cameras (CAM1, CAM2, ..., CAM16) are chosen in high definition to obtain a post-zoom sequence substantially having a single definition.

3. Method according to one of the above claims, **characterised in that** it comprises a compensation step (54) of a difference in brightness/colorimetry between the various images acquired.

4. Method according to one of the above claims, **characterised in that** it comprises a step, subsequent to the image acquisition, for selecting an object of interest (OI) to be tracked in said acquired images.

5. Method according to one of the above claims, **characterised in that** said cameras are arranged to take wide-angle shots so as to cover, together, the largest possible dimensions of the scene.

6. Method according to one of the above claims, **characterised in that** said predefined reference points are characteristic points (CO1, CO2, CO3, CO4) of the scene contrasting with a scene background.

7. Method according to one of claims 1 to 5, **characterised in that** said predefined reference points are given by a test pattern initially arranged on said scene, the cameras being fixed between the test pattern sighting operation and the acquisition of the images of the object of interest.

8. Method according to one of the above claims, **characterised in that** it comprises an interpolation step (56) between the acquired images to produce a substantially flowing sequence.

9. Method according to one of the above claims, **characterised in that** it further comprises a step (57) for virtually inserting a logo or another image in all or part of the acquired images, with definition of the position of the logo or image according to said predefined reference points on the scene.

10. Method according to one of the above claims, **characterised in that** an additional camera (CAMX), which is movable in respect of position and/or setting, suitable for tracking the movements of the object of interest is provided to acquire a first series of images, and **in that** a sequence is constructed by concatenating said first series with the images acquired by said fixed cameras, with realignment of at least part of the images of the first series and the images acquired by the fixed cameras.

11. Method according to one of the above claims, **characterised in that** the cameras acquire, at the same time, respective successions of images, and **in that** a single image is isolated per camera to construct a sequence.

12. Method according to claim 11, **characterised in that** the image sequence is constructed using images acquired substantially at the same time by said cameras.

13. Method according to claim 11, **characterised in that** the image sequence is constructed using images acquired with a time delay chosen from one image to another and increasing according to a camera order in said line.

14. Method according to one of the above claims, **characterised in that** the scene comprises a football pitch penalty area, and **in that** approximately sixteen fixed cameras are provided.

15. Method according to one of the above claims, **characterised in that** said images are intended for substantially live audiovisual broadcasting, and **in that** said sequence is broadcast as an almost live pre-recording.

16. Computer program product, intended to be stored in a memory of a processing unit (PC), or on a removable memory medium and intended to cooperate with a reader (LEC) of said processing unit, **characterised in that** it comprises instructions for implementing the steps of the method according to one of the above claims.

17. Image processing device, comprising:
- inputs (2) for receiving image signals from a plurality of digital cameras,
- memory means (3) suitable for successively storing said image signals, and
- a unit for processing said signals,
**characterised in that** said processing unit comprises a memory storing a computer program product according to claim 16 for implementing the steps of the method according to one of claims 1 to 15.

18. Device according to claim 17, taken in combination with claim 4, **characterised in that** it comprises an input device (CLA, SOU) suitable for cooperating with the processing unit to select an object of interest to be tracked in said acquired images.
